# EUROPÄISCHE PATENTSCHRIFT

(11) **EP 0 810 089 B1**
(45) Veröffentlichungstag und Bekanntmachung des Hinweises auf die Patenterteilung: **16.08.2001**
(21) Anmeldenummer: 97107479.4
(22) Anmeldetag: 07.05.1997
(51) Int. Cl.: B41F 13/03

(54) **Bahneinzugsvorrichtung für eine bahnförmiges Material verarbeitende Maschine, insbesondere eine Rollenrotations-Druckmaschine**
Web threading device for a web material treating machine, particularly a rotary web printing machine
Dispositif d'introduction de bande pour une machine de traitement de matériau en bande, en particulier une machine rotative d'impression pour bandes

(30) Priorität: 29.05.1996 DE 19621507
(43) Veröffentlichungstag der Anmeldung: 03.12.1997
(73) Patentinhaber: Heidelberger Druckmaschinen Aktiengesellschaft, 69115 Heidelberg (DE)
(72) Erfinder: Laubscher, Hans-Jörg, 67435 Neustadt-Gimmeldingen (DE); Krüger, Michael, 68535 Edingen-Neckarhausen (DE)

(56) Entgegenhaltungen:
- DE-C- 3 308 068
- US-A- 4 081 723
- US-A- 5 047 676

## Beschreibung

Die Erfindung betrifft eine Rollenrotations-Druckmaschine mit einer Bahneinzugsvorrichtung für bahnförmiges Material gemäß dem Oberbegriff von Anspruch 1.

Bahneinzugsvorrichtungen für Druckmaschinen sind bekannt. Sie dienen dazu, den Anfang der zu bedruckenden Papierbahn beim Einlegen der Bahn oder nach einem Bahnbruch durch die nachfolgenden Abschnitte der Druckmaschine, d.h. beispielsweise vom Rollenstand aus durch die einzelnen Druckwerke, den Trocknerabschnitt sowie die Kühlsektion entlang einem vorgegebenen Bahnabschnitt automatisch einzuziehen.

Aus der DE-PS 33 08 068 C1 ist eine Vorrichtung zum Einziehen von Materialbahnen in Rotationsdruckmaschinen bekannt, bei der ein Magnetschlitten mit einem daran angeordneten Fanghaken zum Befestigen der Papierbahn auf einem geschlossenen Führungsrohr aus nicht magnetischem Material aufgesetzt und entlang diesem verschiebbar ist. Im Inneren des Führungsrohres sind zugehörige Gegenmagnete angeordnet, die zum Einziehen der Papierbahn mit Hilfe von Druckluft innerhalb des Rohres entlang desselben bewegt werden und aufgrund der magnetischen Kraftwirkung zwischen dem Magnetschlitten und dem Gegenmagneten den außerhalb befindlichen Magnetschlitten mitbewegen. Die Magnete können sowohl durch Permanent-, als auch durch Elektromagnete gebildet werden.

Die US 4,081,723 beschreibt eine Bogenrotations-Offsetdruckmaschine, bei der die von einem Anlegerstapel abgenommenen Bogen durch in endlosen, beidseitig der Druckmaschine angeordneten Führungsschienen umlaufende Greiferwagen durch die einzelnen Druckwerke transportiert werden. Der Antrieb der Greiferwagen erfolgt durch einen elektrischen Linearmotor, der in jeder der Führungsschienen angeordnet ist.

Die DE-PS 20 21 246 beschreibt eine Bahneinzugsvorrichtung, bei der ein mit einem elektrischen Antriebsmotor ausgerüsteter Motorwagen entlang einer Zahnstangenführung verfährt, wobei ein am elektrischen Antriebsmotor angetriebenes Zahnrad mit der Zahnstange in Eingriff steht.

Die DD 263 262 A1 beschreibt eine Vorrichtung zum Einziehen von Materialbahnen in Rotationsdruckmaschinen, bei der die Materialbahn von einem elektrisch betriebenen Motorwagen gezogen wird, der von Führungen aufgenommen ist, die ein Kastenprofil aufweisen. Der Motorwagen besitzt stirnseitig eine Lenkeinrichtung sowie mindestens zwei zueinander in Bewegungsrichtung versetzte Antriebsrollen.

Aus der EP 0425741 A1 ist eine Bahneinzugsvorrichtung bekannt, die eine aus einem flexiblen Führungsstück bestehende Zugeinrichtung aufweist, die durch in Abständen voneinander an einer Führungsschiene angeordnete Antriebsstationen durch die Führungsschiene bewegt wird. Der Antrieb des Führungsstücks erfolgt dabei durch Rollen in den Antriebsstationen, die über in der Führungsschiene gebildete Öffnungen auf das Führungsstück einwirken, wobei der Abstand zwischen den Antriebsstationen geringfügig kleiner als die Länge des flexiblen Führungsstücks ist.

Die zuvor beschriebenen Bahneinzugsvorrichtungen weisen aufgrund ihres auf einem Form-und Reibschluß basierenden Antriebsprinzips sowie ihrer zahlreichen beweglichen Teile vergleichsweise große Reibungsverluste und einen entsprechend großen Verschleiß auf. Durch die zahlreichen beweglichen Teile werden zudem der Vorrichtungsaufwand und die Kosten erhöht. Daneben benötigen die Förderstationen bei der letztgenannten Vorrichtung einen großen Platzbedarf. Schließlich besteht bei den obengenannten Vorrichtungen nach dem Stand der Technik die Gefahr, daß bereits durch eine geringfügige Verschmutzung der Führungsschienen bzw. der Zugeinrichtung Betriebsstörungen auftreten können.

Durch die Erfindung soll die Aufgabe gelöst werden, eine Rollenrotations-Druckmaschine mit einer Bahneinzugsvorrichtung für bahnförmiges Material zu schaffen, mit der die zuvor genannten Nachteile vermieden werden.

Diese Aufgabe wird gemäß der Erfindung durch die Merkmale von Anspruch 1 gelöst.

Weitere Merkmale der Erfindung sind in den Unteransprüchen enthalten.

Die erfindungsgemäße Maschine weist insbesondere den Vorteil auf, daß sie sich kostengünstig herstellen und betreiben läßt und daß sie eine hohe Genauigkeit bei der Positionierung der Zugeinrichtung sowie eine große Konstanz bei der zu erzeugenden Zugkraft besitzt. Darüber hinaus benötigt die Einzugsvorrichtung für den Betrieb lediglich einen geringen Energiebedarf und nahezu keinerlei Wartung. Zudem besteht auch bei einer starken äußeren Schmutzeinwirkung nur eine geringe Gefahr von Betriebsstörungen, die beispielsweise durch ein Zusetzen der Führungsschiene hervorgerufen werden können.

Die Erfindung wird nachfolgend mit Bezug auf die Zeichnungen anhand bevorzugter Ausführungsformen beschrieben. In den Zeichnungen zeigen:
- Fig. 1: eine schematische Seitendarstellung einer Rollenrotations-Offsetdruckmaschine mit verschiedenen Bahnwegen und einer erfindungsgemäßen Bahneinzugsvorrichtung,
- Fig. 2: einen schematischen Längsschnitt durch eine erfindungsgemäße Führungsschiene und die darin enthaltene Zugeinrichtung,
- Fig. 3: eine schematische Querschnittsansicht der Führungsschiene von Fig. 2,
- Fig. 4: eine motorisch verstellbare Weiche zur Umschaltung zwischen verschiedenen Papierwegen in einer Rollenrotations- Offsetdruckmaschine,
- Fig. 5: eine schematische Darstellung einer weiteren Ausführungsform der erfindungsgemäßen Bahneinzugsvorrichtung, bei der der Antrieb der Zugeinrichtung durch im Abstand zueinander an der Führungsschiene angeordnete Antriebsstationen erfolgt,
- Fig. 6: einen schematischen Längsschnitt durch die Führungsschiene und die darin enthaltene Zugeinrichtung der Bahneinzugsvorrichtung nach Fig. 5,
- Fig. 7: eine schematische Querschnittsansicht der Bahneinzugsvorrichtung von Fig.5,
- Fig. 8: eine schematische Darstellung eines ersten Bahnweges, entlang welchem sich die Zugeinrichtung der Bahneinzugsvorrichtung von Fig. 5 bewegt und
- Fig. 9: eine schematische Darstellung eines weiteren alternativen Bahnweges, entlang welchem sich die Zugeinrichtung der Bahneinzugsvorrichtung nach Fig. 5
bewegt.

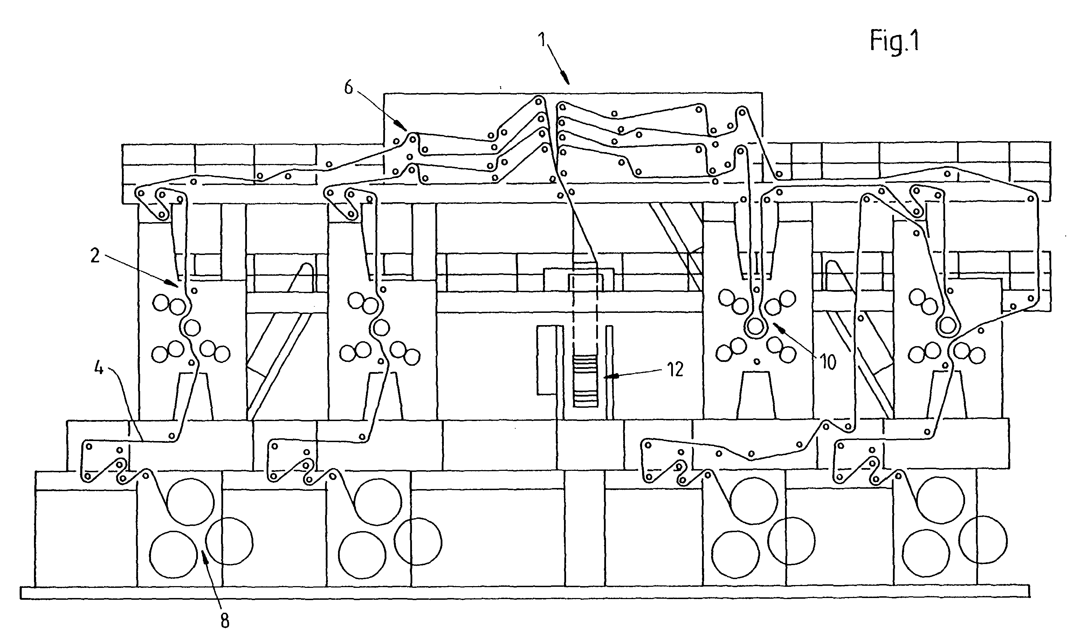

Die in Fig. 1 dargestellte Druckmaschine 1, eine Rollenrotations-Offsetdruckmaschine zum Bedrucken von bahnförmigem Material, umfaßt eine Bahneinzugsvorrichtung 2, mit der das bahnförmige Material 4 entlang einem von dem jeweiligen Druckauftrag abhängigen Bahnweg 6 vom Rollenstand 8 der Druckmaschine durch die einzelnen Druckwerke 10 bis hin zum Falzapparat 12 in die Druckmaschine 1 eingezogen werden kann.

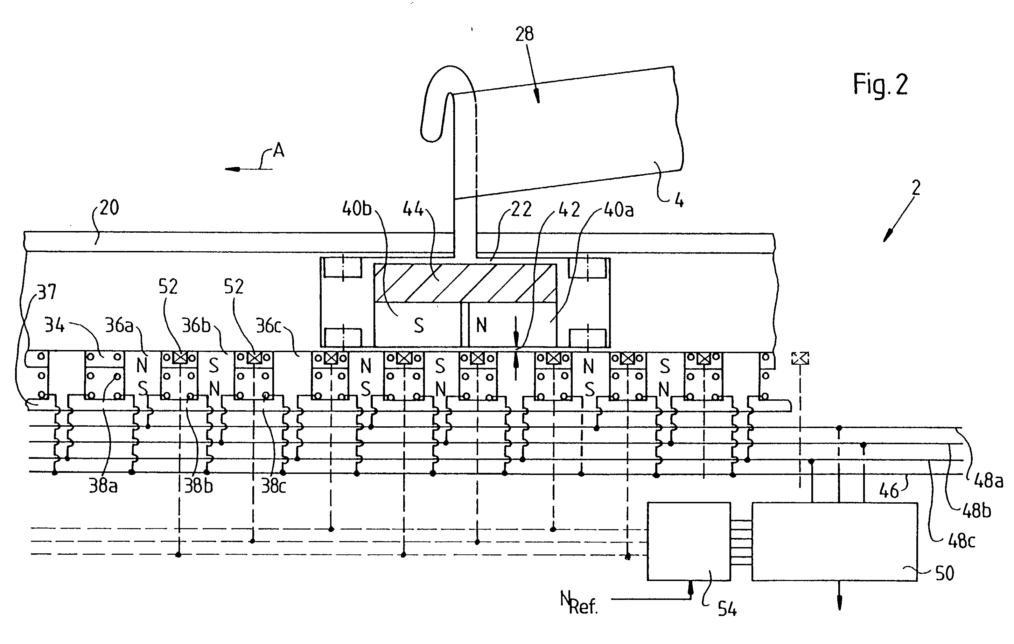

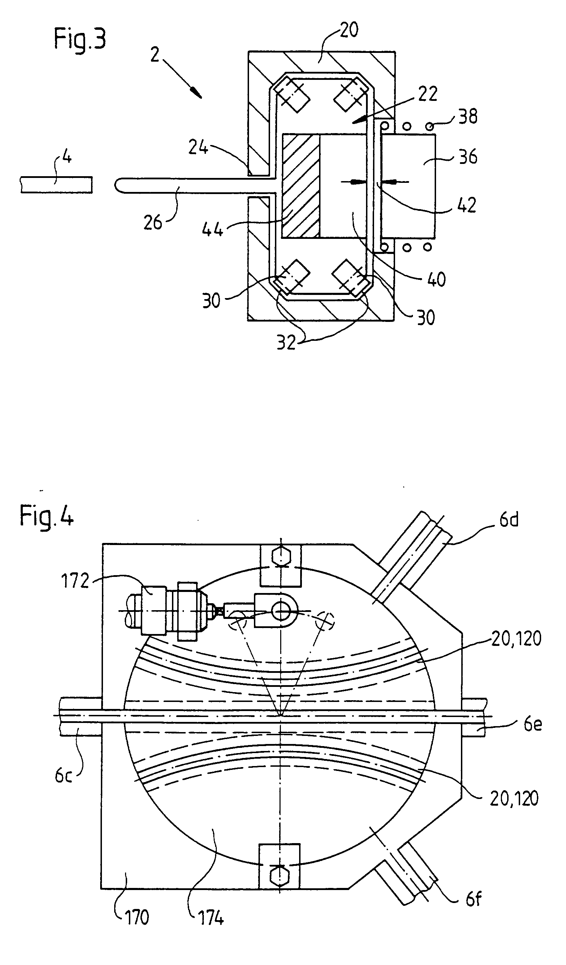

Wie in Fig. 2 und 3 gezeigt, weist die erfindungsgemäße Bahneinzugsvorrichtung 2 eine Führungsschiene 20 auf, die in bekannter Weise seitlich neben dem bahnförmigen Material 4 entlang des Bahnweges 6 durch die Druckmaschine 1 hindurch verläuft und die bei der bevorzugten Ausführungsform der Erfindung einen im wesentlichen C-förmigen Querschnitt aufweist. Die Querschnittsform der Führungsschiene ist jedoch nicht auf die zuvor genannte C-Form beschränkt, sondern kann grundsätzlich jede beliebige Form, beispielsweise eine Kreis-, Oval- oder Polygonform aufweisen.

Innerhalb der Führungsschiene 20 befindet sich die in Längsrichtung der Führungsschiene 20 bewegbare Zugeinrichtung 22, die an ihrer dem bahnförmigen Material 4 zugewandten Seite einen sich durch eine in der Führungsschiene 20 geformte Längsöffnung 24 hindurch erstreckenden Vorsprung 26 aufweist, an welchem das vorlaufende Ende 28 des bahnförmigen Materials 4 beispielsweise mittels eines nicht dargestellten Klebebandes befestigt wird. Die Zugeinrichtung 22 wird bei der bevorzugten Ausführungsform der Erfindung in der Führungsschiene 20 mit Hilfe von Rollen 30 geführt, die sich auf zugehörigen, innerhalb der Führungsschiene 20 geformten Laufflächen 32 abstützen und dadurch eine sichere und spielfreie Führung der Zugeinrichtung 22 gewährleisten. Bei der bevorzugten Ausführungsform der Erfindung sind an den beiden Enden der Zugeinrichtung 22 vorzugsweise jeweils vier, im Winkel von 45° zu den Seitenwänden der Führungsschiene 20 geneigt angeordnete Führungsrollen 30 vorgesehen, die auf entsprechend geneigten Laufflächen 32 der Führungsschiene 20 geführt werden. Durch diese Ausbildung der erfindungsgemäßen Zugeinrichtung 20 ergibt sich bei einer minimalen Rollenzahl- und damit einem minimalen Vorrichtungsaufwand eine maximale Kippsicherheit gegenüber den beim Einziehen der Bahn über den Vorsprung 26 auf die Zugeinrichtung 22 wirkenden Kippmomenten. Durch diese Anordnung ist stets eine leichtgängige und sichere Führung der Zugeinrichtung 22 innerhalb der Führungsschiene 20 gewährleistet. Anstelle der im Winkel zu den Seitenwänden der Führungsschiene 20 geneigt angeordneten Rollen können jedoch auch in gleicher Weise senkrecht auf den Innenflächen der Führungsschiene 20 verlaufende Rollen 30, beispielsweise auf jeder Seite drei, vier oder mehr Rollen 30, vorgesehen sein. Auch ist der Winkel, um den die Rollen 30 geneigt angeordnet sind, nicht auf die beschriebenen 45 ° beschränkt, sondern kann prinzipiell jeden beliebigen Wert zwischen 0° und 90° gegenüber der Vertikalen aufweisen.

In der der Längsöffnung 24 gegenüberliegenden Seitenwand 34 der Führungsschiene 20 sind, wie in Fig.2 dargestellt, Elektromagnete 36 angeordnet, die in bekannter Weise aus einem nicht näher bezeichneten Kern aus magnetisierbarem Material, vorzugsweise aus ferromagnetischem Material, sowie einer darum gewickelten Spule 38 gebildet sein können.

Die Kerne der Elektromagnete 36 können, wie in Fig. 2 gezeigt, auf ihrer einen Seite über ein Polblech 37 miteinander verbunden sein.

An der Zugeinrichtung 22 sind zwei oder mehr Permanentmagnete 40a, 40b befestigt, deren erste Pole in Längsrichtung der Zugeinrichtung 22 gesehen abwechselnd nebeneinanderliegend (Nord-Süd) in der Weise angeordnet sind, daß sie den Polen der Elektromagnete 36 in der Führungsschiene gegenüberliegen. Die Lage der Permanentmagnete 40a, 40b der Zugeinrichtung 22 und die Lage der Elektromagnete 36 der Führungsschiene 20 ist dabei so gewählt, daß sich zwischen den ersten Polen der Permanentmagnete 40a, 40b und den Polen der Elektromagnete 36 ein wohl definierter Spalt 42 ergibt, der eine Größe von beispielsweise 0,5 mm besitzt. Der seitliche Abstand zwischen benachbarten Elektromagneten 36 ist auf den gradlinig verlaufenden Abschnitten der Führungsschiene 20 im wesentlichen konstant. In den gekrümmten Bereichen der Führungsschiene 20 ist der seitliche Abstand sowie die Ausbildung der Elektromagnete 36, bzw. der Spulen 38, welche in diesem Falle den Stator des Linear-Antriebs bilden, vorzugsweise dem Bahnverlauf angepaßt. Die zweiten Pole der Permanentmagnete 40a, 40b werden bei der bevorzugten Ausführungsform der Erfindung durch ein gemeinsames Polblech 44 aus magnetisierbarem Material, vorzugsweise Weicheisen, verbunden. Wie in Fig. 2 dargestellt, ist bei der bevorzugten Ausführungsform der Erfindung der Abstand zwischen den Elektromagneten 36 derart gewählt, daß jeweils drei der Elektromagnete 36, beispielsweise die Magnete 36a, 36b, 36c in Fig. 2, den beiden Permanentmagneten 40a, 40b unmittelbar gegenüberliegen. Hierdurch ergibt sich ein sogenanntes Teilungsverhältnis von 2:3. Das Teilungsverhältnis ist jedoch nicht auf den zuvor genannten Wert von 2 : 3 beschränkt sondern kann prinzipiell jeden beliebigen Wert besitzen.

Wie in Fig.2 dargestellt, sind die jeweils ersten Enden der Spulen 38 der Elektromagnete 36 über eine gemeinsame elektrische Verbindungsleitung 46 miteinander verbunden. Die zweiten Enden jeder vierten Spule 38 werden gruppenweise über entsprechende gemeinsame Leitungen 48a, 48b, 48c mit Strom versorgt. Durch dieses gruppenweise Beschalten der Elektromagnete 36 sind insgesamt lediglich vier Leitungen 46, 48a, 48b und 48c erforderlich, um die Elektromagnete 36 in der Weise mit Strom zu versorgen, daß sich eine Vortriebsbewegung der Zugeinrichtung 22 in Richtung des Pfeiles A entlang der Führungsschiene 20 ergibt. Die für einen Vortrieb der Zugeinrichtung 22 erforderliche wechselweise Bestromung der Spulen 38 der Elektromagnete 36 erfolgt dabei in bekannter Weise über einen nachfolgend nicht näher beschriebenen Umrichter 50. Bei der bevorzugten Ausführungsform der Erfindung versorgt der Umrichter 50 die Spulen 38 der Elektromagnete oder die Gruppen von Elektromagneten 36 wechselweise mit einer entsprechenden Gleichspannung. In gleicher Weise ist jedoch auch eine Versorgung der Elektromagnete 36 bzw. der Gruppen von Elektromagneten 36 mit einer Wechselspannung möglich. Auch ist es möglich die Spulen 38 der Elektromagnete 36 jeweils über einzelne Zuleitungen getrennt mit Strom zu versorgen.

Bei der bevorzugten Ausführungsform der Erfindung sind zwischen den Elektromagneten 36 Sensoren 52 vorgesehen, die die jeweilige Ortsposition und/oder Geschwindigkeit der Zugeinrichtung 22 erfassen und diese einer dem Umrichter 50 vorgeschalteten Steuereinrichtung 54 zuführen, die die Ortsposition und/oder die Geschwindigkeit der Zugeinrichtung 22 mit einem vorgegebenen Referenzwert N_{ref} vergleicht und in Abhängigkeit von diesem Referenzwert den Umrichter 50 steuert. Die Sensoren 52 können in gleicher Weise wie die Elektromagneten 36 gruppenweise über nicht näher bezeichnete Verbindungsleitungen mit der Steuereinrichtung 54 verbunden sein, um eine Reduzierung der Leitungszahl zu erzielen. Der Referenzwert N_{ref} kann beispielsweise durch die zentrale Steuereinrichtung der Druckmaschine während des automatischen Einzugs des bahnförmigen Materials 4 vorgegeben werden. Es ist jedoch auch denkbar, daß der Drucker diesen Referenzwert N_{ref} beispielsweise über eine Fernsteuerung oder ähnliche Einrichtung während des Einzugsvorganges der Materialbahn 4 in die Druckmaschine von Hand eingibt und/oder von Hand verändern kann, beispielsweise um die Geschwindigkeit der Zugeinrichtung 22 zu erhöhen, während er den Einzugsvorgang von außen mitverfolgt.

Weiterhin kann es vorteilhaft sein, die Stromversorgung der Gruppen von Elektromagneten 36 lediglich abschnittsweise über Teilabschnitte mit beispielsweise 50 oder 100 Elektromagneten 36 vorzunehmen und nicht sämtliche Elektromagnete 36 über die gesamte Länge der Führungsschiene 20 während des Einzugsvorgangs zu aktivieren. Die Steuerung der einzelnen Abschnitte der Bahneinzugvorrichtung 2 kann hierbei beispielsweise in der Weise erfolgen, daß ein in Vortriebsrichtung der Zugeinrichtung 22 liegender Abschnitt der Führungsschiene 20 erst kurz vor dem Eintritt der Zugeinrichtung 22 in diesen Abschnitt aktiviert wird und der vorhergehende Abschnitt in entsprechender Weise deaktiviert wird, nachdem die Zugeinrichtung 22 diesen verlassen hat. Die Aktivierung der Abschnitte kann dabei über in den Zeichnungen nicht näher dargestellte Sensoren oder auch über die Sensoren 52 erfolgen.

Die erfindungsgemäße Bahneinzugsvorrichtung 2 wurde vorhergehend anhand eines bevorzugten Ausführungsbeispieles, bei dem in der Zugeinrichtung 22 Permanentmagnete 40a, 40b und an der Führungsschiene 20 Elektromagnete 36 mit Spulen 38 angeordnet sind, beschrieben. In gleicher Weise ist es jedoch denkbar, jedes beliebige bekannte Linear-Antriebs-Prinzip zur Bewegung der Zugeinrichtung 22 zu verwenden. Prinzipiell bildet die Führungsschiene 20 den Stator und die Zugeinrichtung 22 den Läufer eines solchen bekannten Linear-Antriebs.

So ist es beispielsweise möglich, daß die Zugeinrichtung 22 anstelle oder zusätzlich zu den Permanentmagneten 40a, 40b geschlossene, elektrisch erregbare Spulen enthält oder im einfachsten Falle durch ein magnetisierbares, Inhomogenitäten aufweisende Material gebildet wird. Beispielsweise kann die Zugeinrichtung 22 aus einem mit in gleichmäßigen Abständen zueinander angeordneten Öffnungen versehenem Trafoblech bestehen.

In entsprechender Weise kann es vorgesehen sein, die wechselweise erregten, das Primärfeld zum Vortrieb der Zugeinrichtung 22 erzeugenden Elektromagneten 36, bzw. deren Spulen 38 nicht an der Führungsschiene 20 anzuordnen sondern diese in die Zugeinrichtung 22 zu integrieren. Die Stromversorgung der Zugeinrichtung 22 kann dabei entweder über eine nicht dargestellte Stromzufuhrleitung in der Führungsschiene 20 oder einen Akkumulator erfolgen. Ferner können bei dieser Ausführungsform der Erfindung die Elektromagneten 36 der Führungsschiene 20 der Fig. 2 entsprechend durch ein magnetisierbares, Inhomogenitäten enthaltenes Material und/oder durch Permanentmagnete und/oder durch geschlossene elektrisch erregbare Spulen bzw. Elektromagnete ersetzt werden.

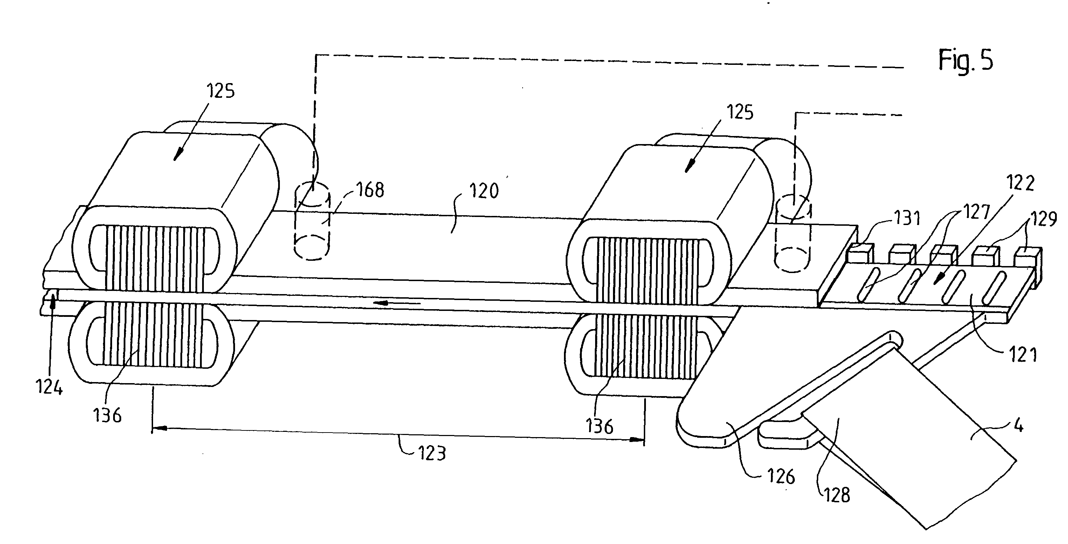

In einer weiteren, in den Figuren 5 bis 9 dargestellten Ausführungsform der Erfindung ist die kompakte und kurze Zugeinrichtung 22 nach Fig. 2 und 3 durch eine sich entlang eines Abschnitts 123 der Führungsschiene 120 erstreckende Führungseinrichtung ausgebildet, die den Läufer des Linear-Antriebes bildet. Die Enden der Abschnitte 123 werden, wie in Fig. 5 dargestellt, durch Antriebsstationen 125 begrenzt, die die Statoren des Linear-Antriebs in Form von elektrisch erregbaren Spulen oder Elektromagneten 136 enthalten. Die Länge der Zugeinrichtung 122 ist bei dieser Ausführungsform der Erfindung geringfügig größer als der Abstand zweier Antriebsstationen 125, d.h. als die Länge eines Abschnitts 123. Die Zugeinrichtung 122 selbst ist bei dieser Ausführungsform der Erfindung bevorzugterweise als ein länglicher, an den Verlauf der Führungsschiene 120 anpaßbarer, Inhomogenitäten in Form von Öffnungen 127 aufweisender Körper 121 ausgebildet, der aus einem magnetisierbaren Werkstoff, z. B. aus Transformatorblech, gefertigt ist. In gleicher Weise wie bei den zuvor beschriebenen Ausführungsformen nach den Figuren 2 und 3 besitzt die Führungsschiene 120 eine Längsöffnung 124, aus welcher sich ein am Körper 121 der Zugeinrichtung 122 geformter Vorsprung 126 herauserstreckt, an dem das vorlaufende Ende 128 des bahnförmigen Materials 4 befestigt wird. Wie in Fig. 5 dargestellt, können am Körper 121 zur Erzielung einer verbesserten seitlichen Führung ein oder mehrere Führungselemente 129 vorgesehen sein, die in einer entsprechenden, in der Führungsschiene 121 geformten Nut 131 geführt werden. Bei dieser Ausführungsform der Erfindung besitzt die Führungsschiene 120 somit einen im wesentlichen T-förmigen Innenraum, in dem der in diesem Falle beispielsweise als flexibles Metallband ausgebildete Körper 121 mit den daran geformten Führungselementen 129 entlanggleitet.

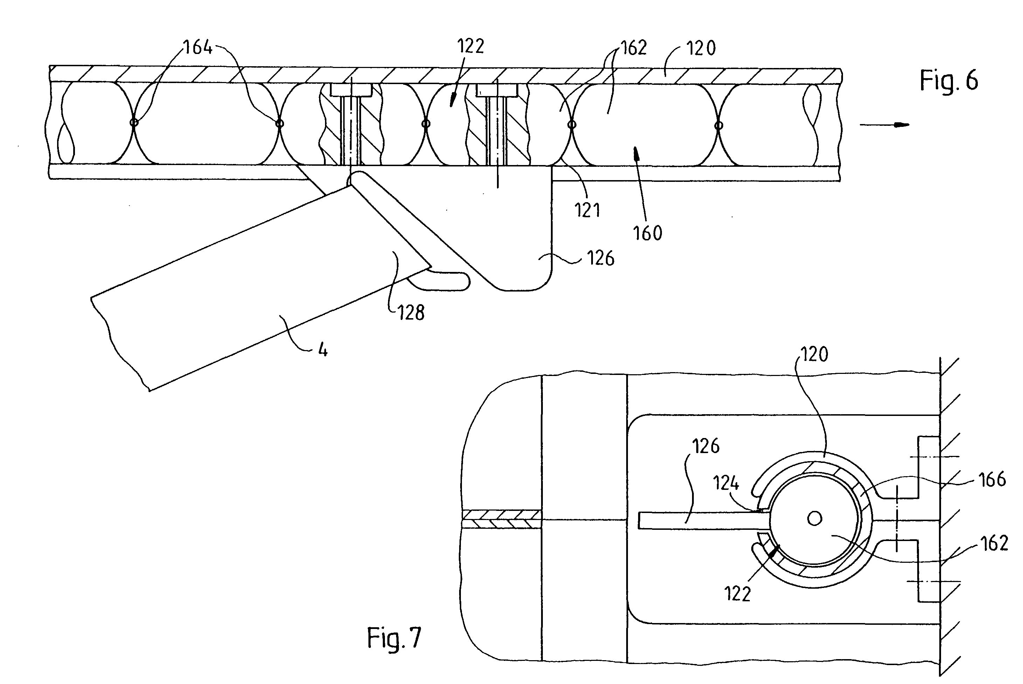

Bei einer weiteren Ausführungsform der Erfindung, welche beispielsweise in den Figuren 6 bis 9 dargestellt ist, wird der Körper 121 der Zugeinrichtung 122 durch eine Gliederkette 160 gebildet, deren Glieder 162 aus einem magnetisierbaren Werkstoff und/oder durch Permanentmagneten gebildet werden. Die Glieder 162 sind dabei, wie in den Figuren 6 bis 9 gezeigt, über Gelenke 164 beweglich miteinander verbunden, und der Vorsprung 126 zur Aufnahme des vorlaufenden Endes 128 des bahnförmigen Materials 4 ist seitlich an einem oder an mehreren der Kettenglieder 162 befestigt. Die Führungsschiene 120 besitzt bei dieser Ausführungsform der Erfindung vorzugsweise einen in Fig. 7 dargestellten kreisförmigen Querschnitt mit einer seitlichen Längsöffnung 124, aus der sich der Vorsprung 126 in zuvor beschriebener Weise seitlich herauserstreckt. Um eine verbesserte Führung und eine verbesserte Gleitfähigkeit der Kettenglieder 162 in der Führungsschiene 120 zu erzielen, kann es weiterhin vorgesehen sein, in der Führungsschiene 120 ein längsgeschlitztes Kunststoffrohr 166 anzuordnen, dessen Innendurchmesser geringfügig größer als der Außendurchmesser eines Kettengliedes 162 ist und in dem die Gliederkette 160 reibungsarm geführt wird. Die Gelenke 164 zur Verbindung der Glieder 162 sind vorzugsweise derart ausgebildet, daß sie lediglich eine Bewegung in einer zum Vorsprung 126 senkrecht verlaufenden Ebene erlauben.

Wie in den Figuren 5, 8 und 9 dargestellt, sind die Antriebsstationen 125 vorzugweise auf einander gegenüberliegenden Seiten der Führungsschiene 120 angeordnet, wodurch die auf den Körper 121 wirkenden elektromagnetischen Vertikalkräfte in vorteilhafter Weise kompensiert werden. Die Führung des Körpers 121 in der Führungsschiene 120 ist bei der in den Figuren 5 bis 9 dargestellten Ausführungsformen der Erfindung in der Weise ausgelegt, daß trotz der Flexibilität des Körpers 121 der Zugeinrichtung 122 ein wohl definierter Luftspalt zwischen den Elektromagneten 136 der Antriebsstationen 125 und dem Körper 121 der Zugeinrichtung 122 über die gesamte Länge der Bahneinzugsvorrichtung 2 gewährleistet ist.

Wie bei der zuvor in den Figuren 2 und 3 beschriebenen Ausführungsformen der Erfindung sind auch bei der Ausführungsform nach den Figuren 5 bis 8 sämtliche Funktionsprinzipien eines bekannten Linear-Antriebs verwendbar. So arbeitet der Linear-Antrieb beispielsweise im Falle des zuvor beschriebenen gelochten flexibleren Trafobleches als sogenannter Reluktanzmotor bzw. als Schrittmotor oder im Falle der Magnetkette als synchron- oder bürstenloser Gleichstrommotor. In gleicher Weise wie zuvor beschrieben, können auch bei den Ausführungsformen nach den Figuren 5 bis 9 Sensoren 168 vorgesehen sein, die die Ortsposition und/oder die Geschwindigkeit der Zugeinrichtung 122 erfassen und diese einer Steuerungseinrichtung zuführen, die in Abhängigkeit von der Geschwindigkeit und/oder der Ortsposition der Zugeinrichtung 122 die Elektromagnete 136 in den Antriebsstationen 125 über einen entsprechenden Umrichter steuert. Zudem ist es möglich, daß die Antriebsstationen 125 erst dann aktiviert werden, wenn die Zugeinrichtung 122 in die jeweilige Arbeitsstation 125 eintritt und in entsprechender Weise die Arbeitsstationen 125 deaktiviert werden, nachdem das Ende der Zugeinrichtung 122 aus der entsprechenden Arbeitsstation 125 ausgetreten ist.

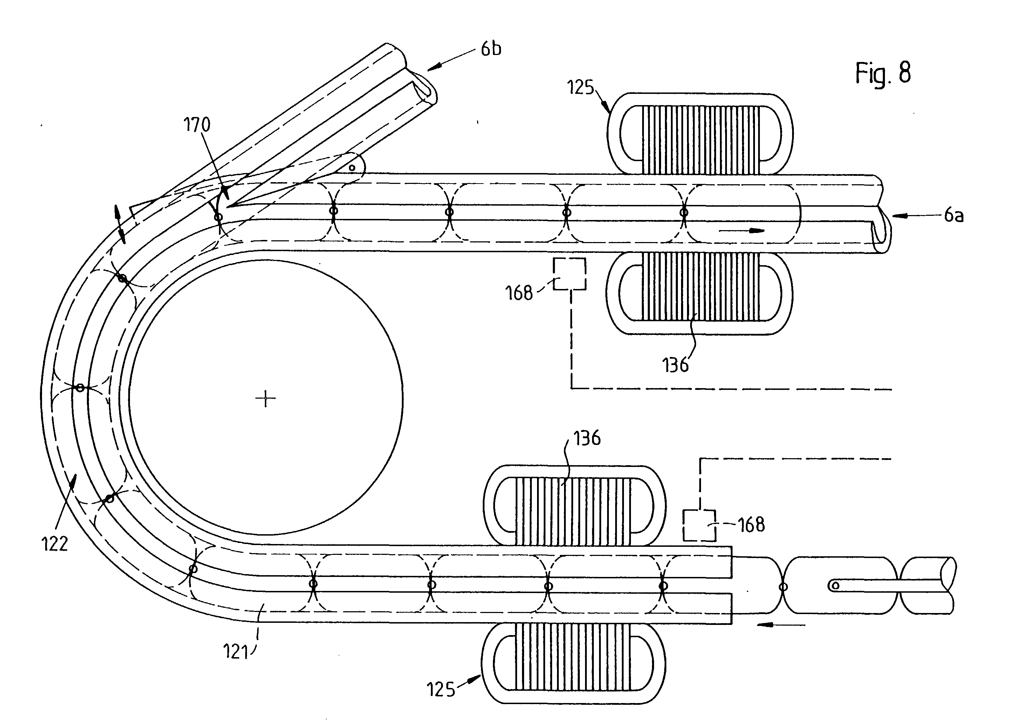

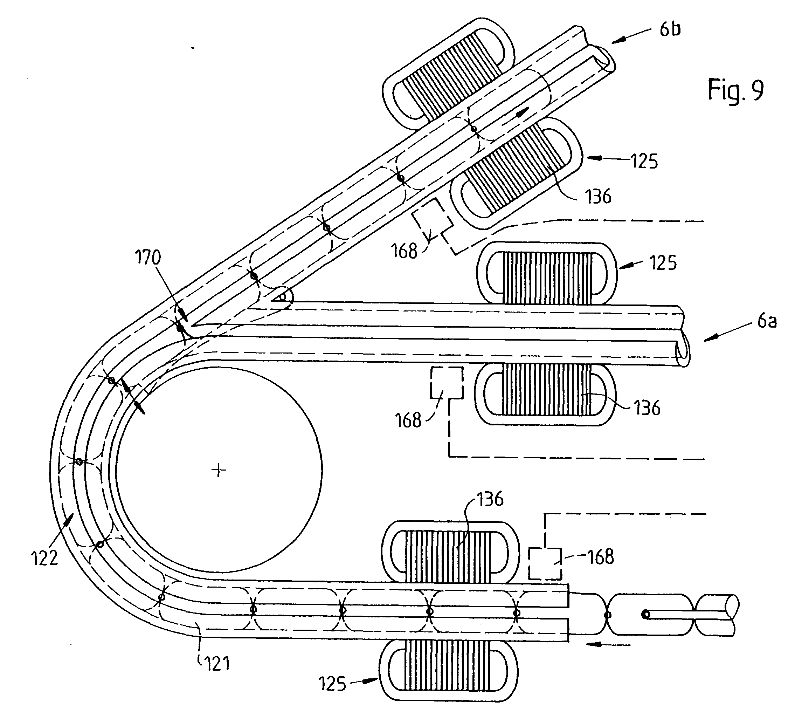

Um einen Einzug des bahnförmigen Materials 4 entlang unterschiedlicher Bahnwege 6 innerhalb der Druckmaschine 1 vornehmen zu können, weist die erfindungsgemäße Bahneinzugsvorrichtung 2 weiterhin eine oder mehrere schaltbare Weichen 170 auf, die, wie in Fig. 4 gezeigt, eine über ein Stellelement 172 rotierbare Scheibe 174 besitzen, auf der in unterschiedliche Richtungen gekrümmte Abschnitte der Führungsschiene 20, 120 angeordnet sind. In Abhängigkeit von der Drehstellung der Scheibe 174 bewegt sich eine entlang des Bahnweges 6c der Fig. 4 einlaufende Zugeinrichtung 22, 122 entlang des Bahnweges 6d, 6e oder 6f. So kann beispielsweise, wie in Fig. 8 und 9 gezeigt, die Zugeinrichtung 122 durch Umschalten der Weiche 170 entweder entlang des Bahnweges 6a, wie in Fig. 8 gezeigt oder aber entlang des Bahnweges 6b, wie in Fig. 9 gezeigt, bewegt werden.

### Bezugszeichenliste

- 1: Rollenrotations-Offsetdruckmaschine
- 2: Bahneinzugsvorrichtung
- 4: bahnförmiges Material
- 6 a, b, c, d, e, f, g: Bahnweg
- 8: Rollenstand
- 10: Druckwerk
- 12: Falzeinrichtung
- 20: Führungsschiene
- 22: Zugeinrichtung
- 24: Längsöffnung in Führungsschiene
- 26: Vorsprung an Zugeinrichtung
- 29: vorlaufendes Ende
- 30: Rolle
- 32: Lauffläche
- 34: Seitenwand
- 36: Elektromagnet
- 37: Polblech
- 38: Spulen der Elektromagnete
- 40 a, b: Permanentmagnete
- 44: Polblech aus magnetischem Material
- 46: Gemeinsame Verbindungsleitung des ersten Endes der Spulen 38
- 48 a, b, c: Verbindungsleitungen
- 50: Umrichter
- 52: Sensoren für Ortsposition und/oder Geschwindigkeit der Zugeinrichtung
- 54: Steuereinrichtung
- A: Pfeil
- N_{Ref}: Referenzwert

- 120: Führungsschiene
- 121: Körper der Zugeinrichtung
- 122: Zugeinrichtung der Ausführungsform nach der Fig. 5 bis 9
- 123: Abschnitt
- 124: Längsöffnung
- 126: Vorsprung
- 127: Öffnungen
- 128: vorlaufendes Ende der Papierbahn
- 129: Führungselemente im Körper 121
- 131: Nut in Führungsschiene zu Ausführungsform nach der Fig. 5
- 136: Elektromagnete
- 160: Gliederkette
- 162: Glieder
- 164: Gelenke
- 166: Plastikrohr
- 168: Sensoren
- 170: Weichen
- 172: Stellelement
- 174: rotierbare Scheibe

## Patentansprüche

1. Rollenrotations-Druckmaschine mit einer Einzugsvorrichtung für bahnförmiges Material mit einer zumindest abschnittsweise durch die Druckmaschine verlaufenden Führungsschiene, sowie einer entlang der Führungsschiene bewegbaren Zugeinrichtung,
**dadurch gekennzeichnet,**
daß die Zugeinrichtung (22, 122) durch einen elektrischen Linearmotor betätigt wird.

2. Rollenrotations-Druckmaschine nach Anspruch 1,
**dadurch gekennzeichnet,**
daß die Zugeinrichtung (22, 122) den Läufer des Linearmotores bildet.

3. Rollenrotations-Druckmaschine nach Anspruch 1 oder 2,
**dadurch gekennzeichnet,**
daß entlang der Führungsschiene (20, 120) elektrisch erregbare Spulen angeordnet sind, die den Stator des Linearmotors bilden.

4. Rollenrotations-Druckmaschine nach Anspruch 1 oder 2,
**dadurch gekennzeichnet,**
daß die Zugeinrichtung (22, 122) ein magnetisierbares, Inhomogenitäten enthaltendes Material und/oder Permanentmagnete (40a, 40b) und/oder geschlossene elektrisch erregbare Spulen enthält, in der Weise, daß bei einer Erregung der Spulen der Führungsschiene (20, 120) ein Vortrieb der Zugeinrichtung (22, 122) erfolgt.

5. Rollenrotations-Druckmaschine Vorrichtung nach Anspruch 1 oder 2,
**dadurch gekennzeichnet,**
daß die Zugeinrichtung (22, 122) eine oder mehrere, ein wechselndes Primärfeld erzeugende Spulen enthält.

6. Rollenrotations-Druckmaschine nach Anspruch 5,
**dadurch gekennzeichnet,**
daß die Führungsschiene (20, 120) ein magnetisierbares Material mit darin angeordneten Öffnungen und/oder Permanentmagnete und/oder elektrisch erregbare Spulen enthält, in der Weise, daß bei einer Erregung der Spulen der Zugeinrichtung ein Vortrieb der Zugeinrichtung erfolgt.

7. Rollenrotations-Druckmaschine nach Anspruch 5 oder 6,
**dadurch gekennzeichnet,**
daß die Stromversorgung der Spulen der Zugeinrichtung (22, 122) durch einen in der Zugeinrichtung vorgesehen Akkumulator erfolgt.

8. Rollenrotations-Druckmaschine nach Anspruch 5 oder 6,
**dadurch gekennzeichnet,**
daß die Erregung der Spulen der Zugeinrichtung (22, 122) über einen durch die Zugeinrichtung betätigten elektrischen Kontakt sowie in der Führungsschiene (20, 120) vorgesehene Stromzufuhrleitungen erfolgt.

9. Rollenrotations-Druckmaschine nach Anspruch 1,
**dadurch gekennzeichnet,**
daß die Zugeinrichtung (122) als eine sich entlang eines Abschnitts (123) der Führungsschiene (120) erstreckende Führungseinrichtung ausgebildet ist und entlang der Führungsschiene (120) abschnittsweise elektrisch erregbare Spulen (136) enthaltende Antriebsstationen (125) vorgesehen sind, wobei die Länge der Zugeinrichtung (122) geringfügig größer als der Abstand zweier Antriebsstationen (125) ist.

10. Rollenrotations-Druckmaschine nach Anspruch 9,
**dadurch gekennzeichnet,**
daß die Zugeinrichtung (122) als länglicher, an den Verlauf der Führungsschiene (120) anpaßbarer Körper (121) ausgebildet ist.

11. Rollenrotations-Druckmaschine nach Anspruch 9 oder 10,
**dadurch gekennzeichnet,**
daß die Zugeinrichtung (122) ein magnetisierbares, Inhomogenitäten enthaltendes Material und/oder Permanentmagnete und/oder geschlossene, durch das Primärfeld der Spulen (136) der Antriebsstationen (125) elektrisch erregbare Spulen enthält, in der Weise, daß bei einer Erregung der Spulen (136) der Antriebsstationen (125) ein Vortrieb der Zugeinrichtung (122) erfolgt.

12. Rollenrotations-Druckmaschine nach einem der Ansprüche 9 bis 11,
**dadurch gekennzeichnet,**
daß die Zugeinrichtung (122) durch eine Gliederkette (160) gebildet wird.

13. Rollenrotations-Druckmaschine nach Anspruch 12,
**dadurch gekennzeichnet,**
daß die Gliederkette (160) ausschließlich aus über Gelenke (164) miteinander verbunden Permanentmagneten gebildet ist.

14. Rollenrotations-Druckmaschine nach einem der Ansprüche 9 bis 13,
**dadurch gekennzeichnet,**
daß erste Erfassungsmittel (168) vorgesehen sind, welche beim Eintritt der Zugeinrichtung (122) in eine Antriebsstation (125) die Arbeitsstation aktivieren.

15. Rollenrotations-Druckmaschine nach einem der vorhergehenden Ansprüche,
**dadurch gekennzeichnet,**
daß der Vortrieb der Zugeinrichtung (22, 122) durch eine Steuereinrichtung (50, 54) gesteuert wird.

16. Rollenrotations-Druckmaschine nach Anspruch 15,
**dadurch gekennzeichnet,**
daß entlang der Führungsschiene (20, 120) zweite Erfassungsmittel (52) vorgesehen sind, in Abhängigkeit von welchen die Steuerung des Vortriebs der Zugeinrichtung (22, 122) erfolgt.

17. Rollenrotations-Druckmaschine nach einem der vorhergehenden Ansprüche,
**dadurch gekennzeichnet,**
daß eine oder mehrere schaltbare Weichen (170) vorgesehen sind, mit denen die Zugeinrichtung (22, 122) entlang unterschiedlicher Bahnwege (6, 6a, 6b, 6c, 6d, 6e, 6f) geführt werden kann.

18. Rollenrotations-Druckmaschine nach einem der vorhergehenden Ansprüche,
**dadurch gekennzeichnet,**
daß die Führungsschiene (20, 120) einen im wesentlichen C-förmigen oder T-förmigen Querschnitt aufweist.

19. Rollenrotations-Druckmaschine nach einem der vorhergehenden Ansprüche,
**dadurch gekennzeichnet,**
daß der Zugeinrichtung (22, 122) durch Rollen (30) und/oder Führungsflächen (32) in der Führungsschiene (20, 120) geführt wird.

20. Rollenrotations-Druckmaschine nach einem der Ansprüche 3, 5 oder 9,
**dadurch gekennzeichnet**,
daß die Versorgung der Spulen durch eine Gleichspannung erfolgt.

21. Rollenrotations-Druckmaschine nach einem der Ansprüche 3, 5 oder 9,
**dadurch gekennzeichnet,**
daß die Versorgung der Spulen durch eine Wechselspannung erfolgt

22. Rollenrotations-Druckmaschine nach Anspruch 3,
**dadurch gekennzeichnet,**
daß die Spulen entlang der Führungsschine (22, 122) abschnittsweise aktivierbar sind, wobei jeweils ausschließlich derjenige Abschnitt aktiviert ist, in dem sich die Zugeinrichtung (22, 122) gerade befindet.

23. Rollenrotations-Druckmaschine nach Anspruch 3,
**dadurch gekennzeichnet,**
daß der Stator dem Bahnverlauf der Führungsschiene (20, 120) angepaßt ist.

## Claims

1. Web-fed rotary printing press having an infeed device for web-shaped material, a guide rail extending at least sectionally in the printing press, and a pulling device movable along the guide rail,
**characterized in**
that the pulling device (22, 122) is activated by an electric linear motor.

2. Web-fed rotary printing press according to claim 1,
**characterized in**
that the pulling device (22, 122) forms the rotor of the linear motor.

3. Web-fed rotary printing press according to claim 1 or 2,
**characterized in**
that electrically excitable coils forming the stator of the linear motor are arranged along the guide rail (20, 120).

4. Web-fed rotary printing press according to claim 1 or 2,
**characterized in**
that the pulling device (22, 122) contains a magnetizable material having inhomogeneities and/or permanent magnets (40a, 40b) and/or closed electrically excitable coils in such a way that when the coils of the guide rail (20, 120) are excited the pulling device (22, 122) is driven forward.

5. Web-fed rotary printing press according to claim 1 or 2,
**characterized in**
that the pulling device (22, 122) contains one or more coils generating an alternating primary field.

6. Web-fed rotary printing press according to claim 5,
**characterized in**
that the guide rail (20, 120) contains a magnetizable material having apertures formed therein and/or permanent magnets and/or electrically magnetizable coils in such a way that when the coils are excited the pulling device is driven forward.

7. Web-fed rotary printing press according to claim 5 or 6,
**characterized in**
that the power supply of the coils of the pulling device (22, 122) is provided by an accumulator arranged in the pulling device.

8. Web-fed rotary printing press according to claim 5 oder 6,
**characterized in**
that the excitation of the coils of the pulling device (22, 122) is caused by power supply lines provided in the guide rail (20, 120) and by an electric contact activated by the pulling device.

9. Web-fed rotary printing press according to claim 1,
**characterized in**
that the pulling device (122) is a guide device extending along a section (123) of the guide rail (120), that along the guide rail (120) drive stations (125) comprising electrically excitable coils (136) are sectionally provided and that the length of the pulling device (122) is slightly greater than the distance between two drive stations (125).

10. Web-fed rotary printing press according to claim 9,
**characterized in**
that the pulling device (122) is an elongated body (121) adaptable to the profile of the guide rail (120).

11. Web-fed rotary printing press according to claim 9 or 10,
**characterized in**
that the pulling device (122) contains a magnetizable material having inhomogeneities and/or permanent magnets and/or closed coils electrically excitable by the primary field of the coils (136) of the drive station (125) so that when the coils (136) of the drive stations (125) are excited, the pulling device (122) is driven forward.

12. Web-fed rotary printing press according to one of claims 9 to 11,
**characterized in**
that the pulling device (122) is a link chain (160).

13. Web-fed rotary printing press according to claim 12,
**characterized in**
that the link chain (160) exclusively consists of permanent magnets connected to each other by joints (164).

14. Web-fed rotary printing press according to one of claims 9 to 13,
**characterized in**
that first detecting means (168) are provided for actuating the work station when the pulling device (122) enters a drive station (125).

15. Web-fed rotary printing press according to one of the preceding claims,
**characterized in**
that the driving forward of the pulling device (22, 122) is controlled by a control device (50, 54).

16. Web-fed rotary printing press according to one of the preceding claims,
**characterized in**
that along the guide rail (20, 120) second detecting means (52) are provided depending on which the driving forward of the pulling device (22, 122) is controlled.

17. Web-fed rotary printing press according to one of the preceding claims,
**characterized in**
that one or more switches (170) are provided, by means of which the pulling device (22, 122) can be guided along different web paths (6, 6a, 6b, 6c, 6d, 6e, 6f).

18. Web-fed rotary printing press according to one of the preceding claims,
**characterized in**
that the guide rail (20, 120) has a substantially C-shaped or T-shaped cross-section.

19. Web-fed rotary printing press according to one of the preceding claims,
**characterized in**
that the pulling device (22, 122) is guided in the guide rail (20, 120) by rolls (30) and/or guide surfaces (32).

20. Web-fed rotary printing press according to one of claims 3, 5 or 9,
**characterized in**
that the supply of the coils is done by a direct voltage.

21. Web-fed rotary printing press according to one of claims 3, 5 or 9,
**characterized in**
that the supply of the coils is done by an alternating voltage.

22. Web-fed rotary printing press according to claim 3,
**characterized in**
that the coils along the guide rail (22, 122) are sectionally activatable, and that only the section is activated in which the pulling device (22, 122) is currently located.

23. Web-fed rotary printing press according to claim 3,
**characterized in**
that the stator is adapted to the path of the web of the guide rail (20, 120).

## Revendications

1. Machine à imprimer rotative à bobines comprenant un dispositif d'enfilage pour matière en bande qui comprend un rail de guidage courant à travers la machine à imprimer, au moins par segments, ainsi qu'un dispositif de traction qui peut circuler le long du rail de guidage,
caractérisée en ce que le dispositif de traction (22, 122) est actionné par un moteur électrique linéaire.

2. Machine à imprimer rotative à bobines selon la revendication 1,
caractérisée
en ce que le dispositif de traction (22, 122) forme l'induit du moteur linéaire.

3. Machine à imprimer rotative à bobines selon la revendication 1 ou 2,
caractérisée
en ce que, sur la longueur du rail de guidage (20, 120), sont disposées des bobines pouvant être excitées électriquement, qui forment le stator du moteur linéaire.

4. Machine à imprimer rotative à bobines selon la revendication 1 ou 2,
caractérisée
en ce que le dispositif de traction (22, 122) comprend une matière magnétisable, contenant des inhomogénéités et/ou des aimants permanents (40a, 40b) et/ou des bobines fermées, pouvant être excitées électriquement, de telle manière qu'en réponse à une excitation des bobines du rail de guidage (20, 120), il se produise une propulsion du dispositif de traction (22, 122).

5. Machine à imprimer rotative à bobines selon la revendication 1 ou 2,
caractérisée
en ce que le dispositif de traction (22, 122) comprend une ou plusieurs bobines qui produisent un champ primaire alternatif.

6. Machine à imprimer rotative à bobines selon la revendication 5,
caractérisée
en ce que le rail de guidage (20, 120) comprend une matière magnétisable dans laquelle sont disposées des ouvertures et/ou des aimants permanents et/ou des bobines pouvant être excitées électriquement, de telle manière qu'en réponse à une excitation des bobines du dispositif de traction, il se produise une propulsion du dispositif de traction

7. Machine à imprimer rotative à bobines selon la revendication 5 ou 6,
caractérisée
en ce que l'alimentation électrique des bobines du dispositif de traction (22, 122) est assurée par un accumulateur prévu dans le dispositif de traction.

8. Machine à imprimer rotative à bobines selon la revendication 5 ou 6,
caractérisée
en ce que l'excitation des bobines du dispositif de traction (22, 122) s'effectue au moyen d'un contact électrique actionné par le dispositif de traction ainsi que de lignes d'amenée du courant prévues dans le rail de guidage (20, 120).

9. Machine à imprimer rotative à bobines selon la revendication 1,
caractérisée
en ce que le dispositif de traction (122) est constitué par un dispositif de guidage s'étendant le long d'un segment (123) du rail de guidage et que des stations d'entraînement (125) qui renferment des bobines (136) pouvant être excitées électriquement sont prévues par segments sur la longueur du rail de guidage (120), la longueur du dispositif de traction (122) étant légèrement plus grande que la distance d'écartement entre deux stations d'entraînement (125).

10. Machine à imprimer rotative à bobines selon la revendication 9,
caractérisée
en ce que le dispositif de traction (122) est constitué par un corps allongé (121) qui peut s'adapter au profil longitudinal du rail de guidage (120).

11. Machine à imprimer rotative à bobines selon la revendication 9 ou 10,
caractérisée
en ce que le dispositif de traction (122) comprend une matière magnétisable contenant des inhomogénéités et/ou des aimants permanents et/ou des bobines fermées, qui peuvent être excitées électriquement par le champ primaire des bobines (66) des stations d'entraînement (125), de telle manière qu'en réponse à une excitation des bobines (136) des stations d'entraînement (125), il se produise une propulsion du dispositifde traction (122).

12. Machine à imprimer rotative à bobines selon une des revendications 9 à 11,
caractérisée
en ce que le dispositif de traction (122) est formé par une chaîne à maillons (160).

13. Machine à imprimer rotative à bobines selon la revendication 12,
caractérisée
en ce que la chaîne à maillons (160) est exclusivement formée d'aimants permanents reliés entre eux par des articulations (164).

14. Machine à imprimer rotative à bobines selon une des revendications 9 à 13,
caractérisée
en ce qu'il est prévu des premiers moyens de détection (168) qui, lors de l'entrée du dispositif de traction (122) dans une station d'entraînement (125), activent la station de travail,.

15. Machine à imprimer rotative à bobines selon une des revendications précédentes,
caractérisée
en ce que la propulsion du dispositif de traction (22, 122) est commandée par un dispositif de commande (50, 54).

16. Machine à imprimer rotative à bobines selon la revendication 15,
caractérisée en ce que, le long du rail de guidage (20, 120), sont prévus des deuxièmes moyens de détection (52) en fonction desquels s'effectue la commande de la propulsion du dispositif de traction (22, 122).

17. Machine à imprimer rotative à bobines selon une des revendications précédentes,
caractérisée en ce qu'il est prévu un ou plusieurs aiguillages (170) commandés avec lesquels le dispositif de traction (22, 122) peut être dirigé le long de différents trajets (6, 6a, 6b, 6c, 6e, 6f).

18. Machine à imprimer rotative à bobines selon une des revendications précédentes,
caractérisée en ce que le rail de guidage (20, 120) présente une section sensiblement en forme de T ou en forme de C.

19. Machine à imprimer rotative à bobine selon une des revendications précédentes,
caractérisée
en ce que le dispositif de traction (22, 122) est guidé dans le rail de guidage (20, 120) par des galets (30 et/ou des surfaces de guidage (32).

20. Machine à imprimer rotative à bobine selon une des revendications 3, 5 ou 9,
caractérisée
en ce que l'alimentation des bobines est réalisée par une tension continue.

21. Machine à imprimer rotative à bobines selon une des revendications 3, 5ou 9,
caractérisée
en ce que l'alimentation des bobines est réalisée par une tension alternative.

22. Machine à imprimer rotative à bobines selon la revendication 3,
caractérisée
en ce que les bobines peuvent être activées par segments sur la longueur du rail de guidage (22, 122), et seul le segment dans lequel le dispositif de traction (22, 122) se trouve est activé.

23. Machine à imprimer rotative à bobines selon la revendication 3,
caractérisée
en ce que le stator est adapté au profil du trajet du rail de guidage (20, 120).
